(19) Europäisches Patentamt
European Patent Office
Office européen des brevets

(11) Veröffentlichungsnummer: **0 639 611 A2**

(12) **EUROPÄISCHE PATENTANMELDUNG**

(21) Anmeldenummer: **94112371.3**

(51) Int. Cl.⁶: **C08K 5/00**, D04H 1/00

(22) Anmeldetag: **08.08.94**

(30) Priorität: **17.08.93 DE 4327595**

(43) Veröffentlichungstag der Anmeldung:
**22.02.95 Patentblatt 95/08**

(84) Benannte Vertragsstaaten:
**AT BE CH DE DK ES FR GB IE IT LI LU NL PT SE**

(71) Anmelder: **HOECHST AKTIENGESELLSCHAFT**
**Brüningstrasse 50**
**D-65929 Frankfurt am Main (DE)**

(72) Erfinder: **Eichenauer, Dieter, Dr.**
**Richard-Wagner-Strasse 87**
**D-65830 Kriftel (DE)**
Erfinder: **Groh, Werner, Dr.**
**Dieulefiter Strasse 7**
**D-35423 Lich (DE)**
Erfinder: **Macholdt, Hans-Tobias, Dr.**
**Waldstrasse 20**
**D-64297 Darmstadt (DE)**
Erfinder: **Jung, Holger, Dr.**
**Feldbergblick 8**
**D-65527 Niedernhausen (DE)**
Erfinder: **Neuert, Richard, Dr.**
**Brunnerweg 2**
**D-90610 Winkelhaid (DE)**
Erfinder: **Dahringer, Jörg**
**Bahnhofstrasse 36**
**D-86399 Bobingen (DE)**

(54) **Zusammensetzungen mit verbesserten elekfro-statischen Eigenschaften enthaltend aromatische Polyamide, daraus hergestellte geformte Gebilde sowie deren Verwendung und Verfahren zu ihrer Herstellung.**

(57) Beschrieben werden Zusammensetzungen enthaltend ein in organischen Lösungsmitteln lösliches aromatisches Polyamid und 0,01 bis 30 Gew.-%, bezogen auf das Gewicht der Zusammensetzung, organische oder metallorganische Ladungssteuermittel.

Die Zusammensetzungen lassen sich zur Herstellung von geformten Gebilden, insbesondere von Fasern einsetzen; diese Fasern werden vorzugsweise zur Herstellung von Vliesen eingesetzt, welche zur Herstellung von Staubfiltern verwendet werden können.

EP 0 639 611 A2

Die vorliegende Erfindung betrifft Zusammensetzungen enthaltend ausgewählte aromatische Polyamide, die aufgrund eines Gehaltes an Ladungssteuermitteln verbesserte elektrostatische Eigenschaften aufweisen, sowie daraus hergestellte geformte Gebilde, wie faden- und flächenförmige Textilmaterialien, insbesondere Garne, Kabel und Vliese, die aus diesen verbesserten Gebilden bestehen oder diese enthalten, deren Verwendung, sowie Verfahren zur Herstellung der geformten Gebilde.

Gebilde im Sinne dieser Erfindung sind geformte Gebilde, wie Fasern, aus elektrisch nichtleitenden aromatischen Polyamiden, die eine aufgebrachte elektrostatische Ladung über längere Zeit zu speichern vermögen und/oder sich triboelektrisch aufladen.

Elektretfasern sind bisher hauptsächlich im Zusammenhang mit dem Problem der Feinststaubfiltration beschrieben worden. (Z.B. von Biermann, "Evaluation of permanently charged elektrofibrous filters", 17. DOE Nuclear Air Cleaning Conference, Denver, USA, (1982) sowie in Chemiefasern/Textilindustrie 40/92, (1990/9)).
Die beschriebenen Filtermaterialien unterscheiden sich sowohl hinsichtlich der Materialien, aus denen die Fasern bestehen als auch bezüglich der Art und Weise wie die elektrostatische Ladung auf die Fasern aufgebracht wird.

Die elektrostatische Ladung kann durch verschiedene Methoden appliziert werden. So ist es möglich, Polymer-Folien auf beiden Seiten unterschiedlich elektrostatisch aufzuladen und anschließend zu spalten. Man erhält hierbei sog. Split-Film-Fasern, die in der Regel als Faservlies abgelegt werden.

Weiterhin ist es bekannt, in ein starkes elektrostatisches Feld hineinzuspinnen oder die ersponnenen Fasern oder Fasererzeugnisse, z.B. Vliese, einer elektrischen Coronaentladung, z.B. zwischen hochgespannten Spitzen oder Drähten und geerdeten Flächenelektroden, auszusetzen.

Besonders vorteilhaft ist die Aufladung durch triboelektrische Effekte, d.h. Ladungstrennung durch Reibung der Fasermaterialien mit anderen Medien, z.B. anderen Polymermaterialien, Festkörpern wie Metallflächen oder auch flüssigen oder gasförmigen Medien.

Verschiedene Faserrohstoffe wurden bisher untersucht und empfohlen um Elektretfasern mit vorteilhaften Elektreteigenschaften, wie langdauernder Ladungsstabilität, Feuchtigkeits- und Chemikalienresistenz herzustellen. Dabei sollen diese vorteilhaften Eigenschaften auch bei möglichst geringen Kosten zu erzielen sein.

Dabei haben sich Fluorpolymere wie Polytetrafluorethylen oder perfluorierte Ethylen/Propylen-Copolymere als sehr gute Elektretwerkstoffe erwiesen, die hohe Ladungsstabilität, charakterisiert durch eine Ladungs-Halbwertszeit (Ladungs-Lebensdauer) von Jahren bis Jahrzehnten, mit guter Temperaturstabilität und geringer Feuchtigkeitsaufnahme vereinen. Gravierende Nachteile dieser Polymere, wie ihr hoher Preis und die großen Schwierigkeiten ihrer Verarbeitung, haben jedoch ihren Einsatz weitgehend verhindert.

Gute Resistenz gegen Chemikalien und Feuchtigkeit haben auch Elektretfasern aus Polyolefinen, wie Polyethylen und Polypropylen, oder aus Polycarbonaten. Handelsübliche Feinststoffilter bestehen aus diesen Elektretmaterialien (Chemiefasern/Textilindustrie, wie oben angegeben). Ein gravierender Nachteil dieser Fasern ist die relativ geringe Ladungs-Halbwertszeit die nur in der Größenordnung von etwa einem Jahr liegt. Dies ist in der Regel ein zu geringer Zeitraum, wenn man bedenkt, daß z.B. beim Einsatz der Fasern für die Filterherstellung die Zeit von der Faserherstellung bis zur Ingebrauchnahme des Filters plus der Filter-Lebensdauer leicht über einem Jahr liegen kann.

Schon solange Elektretfasern zur Herstellung von Feinststoffiltern empfohlen und benutzt wurden, bestand daher ein stetiges dringendes Bedürfnis, einen Faserwerkstoff zu finden, der Preiswürdigkeit mit deutlich verbesserter Ladungsstabilität, Resistenz gegen Feuchtigkeit und Chemikalien, sowie gute textiltechnische und mechanische Eigenschaften in sich vereint und es sind auch bereits Vorschläge hierzu bekannt geworden.

In der US-Patentschrift 4,789,504 wird empfohlen, die Effektivität von Polypropylen-Elektretfiltern dadurch zu steigern, daß dem Polymermaterial ein Fettsäure-Salz zugesetzt wird.

Aus Journal of Electrostatics, 24 (1990) S. 283-293 ist es bekannt, daß die Temperatur, bei der unter standardisierten Meßbedingungen die Ladungsdichte eines Polyacrylat-Elektrets auf die Hälfte sinkt, von 126 auf 180 °C steigt, wenn dem Polymer ca. 10 Gew.-% Titandioxid zugesetzt wird. Dieser Zusatz hat jedoch neben einer Verschlechterung mechanischer Eigenschaften eine erhöhte Feuchtigkeits-empfindlichkeit zur Folge, die einem Einsatz in Filtermaterialien entgegensteht.

Es wurde nun gefunden, daß es möglich ist, aus Zusammensetzungen auf der Basis von ausgewählten aromatischen Polyamiden geformte Gebilde, wie Fasern oder Folien herzustellen, die gute mechanische Eigenschaften, eine erheblich verlängerte Halbwertszeit der elektrischen Ladung und/oder ein verbessertes triboelektrisches Verhalten, sowie eine hohe Chemikalien- und/oder Temperaturbeständigkeit aufweisen.

Die erfindungsgemäßen Zusammensetzungen enthalten ein in organischen Lösungsmitteln lösliches aromatisches Polyamid und 0,01 bis 30 Gew.-%, vorzugsweise 0,01 bis 10, insbesondere 0,1 bis 5 Gew.-%,

bezogen auf das Gewicht des Gebildes, organische oder metallorganische Ladungssteuermittel.

Die erfindungsgemäßen Zusammensetzungen eignen sich insbesondere zur Herstellung geformter Gebilde, bei deren Anwendungen die Stabilität elektrostatischer Ladungen eine Rolle spielt.

Der Begriff "geformtes Gebilde" ist im Rahmen dieser Erfindung in seiner breitesten Bedeutung zu verstehen. Darunter ist also ein Formkörper zu verstehen, der durch einen beliebigen Formgebungsprozess des erfindungsgemäß einzusetzenden Werkstoffes erhältlich ist.

Vorzugsweise handelt es sich bei den geformten Gebilden um Filme oder insbesondere um Fasern.

Der Begriff "Faser" ist im Rahmen dieser Erfindung ebenfalls in seiner breitesten Bedeutung zu verstehen; dazu zählen also zum Beispiel Filamente oder Stapelfasern beliebiger Titer.

Der Begriff "Film" ist im Rahmen dieser Erfindung ebenfalls in seiner breitesten Bedeutung zu verstehen; dazu zählen also zum Beispiel Ausführungsformen unterschiedlicher Stärke oder Funktion, wie Membranen, Beschichtungen oder insbesondere Folien.

Unter in organischen Lösungsmitteln löslichem aromatischen Polyamid werden im Rahmen dieser Erfindung alle Polymere verstanden, die die wiederkehrenden Struktureinheiten der Formeln I, gegebenenfalls II und gegebenenfalls III aufweisen

$-OC-Ar^1-CO-NH-Ar^2-NH-$ (I),

$-OC-Ar^1-CO-NH-Ar^3-NH-$ (II),

$-OC-Ar^1-CO-NH-Ar^4-NH-$ (III),

worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden,
$Ar^3$ und $Ar^4$ oder $Ar^2$, $Ar^3$ und $Ar^4$, falls in einem Polymermolekül auftretend, im Einzelfall jeweils unterschiedliche, im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches aromatisches Polyamid ergibt.

Unter löslichem aromatischen Polyamid ist im Rahmen dieser Erfindung ein aromatisches Polyamid zu verstehen, daß bei 25 °C eine Löslichkeit in N-Methylpyrrolidon von mindestens 50 g/l aufweist.

Das organische Lösungsmittel ist keinerlei Begrenzungen unterworfen, solange sich sich das aromatische Polyamid darin lösen läßt. Vorzugsweise verwendet man ein organisches, polares und aprotisches Lösungsmittel, insbesondere ein Lösungsmittel vom Amidtyp, wie z. B. N-Methyl-2-pyrrolidon, N,N-Dimethylacetamid, N,N-Dimethylformamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff.

Bevorzugt setzt man aromatische Polyamide ein, die in polaren aprotischen Lösungsmitteln löslich sind und die mindestens zwei, insbesondere drei wiederkehrende Diamineinheiten aufweisen.

Besonders bevorzugt handelt es sich bei den in organischen Lösungsmitteln löslichen aromatischen Polyamiden um Polymere, welche die wiederkehrenden Struktureinheiten der oben definierten Formeln I, II und III aufweisen, worin $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$-Ar^5-X-Ar^6-$ (IV),

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, $-SO_2-$, -O-Phenylen-O- oder Alkylen ist, und worin
$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

In einer weiteren bevorzugten Ausführungsform handelt es sich bei dem in organischen Lösungsmitteln löslichen aromatischen Polyamid um ein Polymeres, welches die wiederkehrenden Struktureinheiten der oben definierten Formeln I aufweist, worin

$Ar^1$ einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden, und

$Ar^2$ einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die 4,4'-Biphenyl-yl-en-Bindungen. Ein Beispiel für parallel, entgegegesetzt gerichtete Bindungen sind die Naphthylen-1,5- oder -2,6-Bindungen, während die Naphthylen-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -Brückengruppen, wie z.B. -O-, $-CH_2-$, -S-, -CO- oder $-SO_2-$ miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung, insbesondere die Ladungsbeständigkeit, nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet aromatische Polyamide auf der Basis von unsubstituierten Resten.

Besonders bevorzugte Reste $Ar^1$ bis $Ar^6$ sind 1,4-Phenylen oder 1,3-Phenylen.

X ist vorzugsweise -O-, $-CH_2-$, oder -O-1,4-Phenylen-O-.

Als Dicarbonsäureeinheit in den aromatischen Polyamiden enthaltend die wiederkehrenden Struktureinheiten der Formeln I, II und III setzt man vorzugsweise Terephthalsäureeinheiten ein.

Beispiele für bevorzugte Diaminkombinationen, die diesen bevorzugten wiederkehrenden Struktureinheiten der Formeln I, II, und III zugrundeliegen, sind 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether.

Aramide, die sich von solchen Diaminkombinationen ableiten und die sich bevorzugt gemäß der vorliegenden Erfindung einsetzen lassen, sind in den EP-A-199,090, EP-A-364,891, EP-A-394,892, EP-A-394,893 und EP-A-424,860 beschrieben.

Weitere bevorzugte aromatische Polyamide zum Einsatz gemäß der vorliegenden Erfindung sind Polymere mit den wiederkehrenden Struktureinheiten der Formel I, worin $Ar^1$ und $Ar^2$ jeweils 1,3-Phenylen bedeuten.

Ganz besonders bevorzugt setzt man aromatische Copolyamide ein, welche die wiederkehrenden Struktureinheiten der Formeln I, II und III aufweisen, und worin $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, $-CH_2$- oder -O-1,4-Phenylen-O- ist und $Ar^4$ einen zweiwertigen Rest des 3,3'-Dichlorbenzidins, des 3,3'-Dimethylbenzidins, des 3,3'-Dimethoxybenzidins oder des 3,4'-Diaminodiphenylethers darstellt.

Die erfindungsgemäß einzusetzenden aromatischen Polyamide sind an sich bekannt und können mittels an sich bekannter Verfahren hergestellt werden.

Fasern im Sinne der vorliegenden Erfindung sind Endlosfasern (Filamente) oder Stapelfasern, vorzugsweise mit Stapellängen von 0,5 bis 50 mm oder Pulpe.

Bevorzugt sind erfindungsgemäße Fasern mit besonders großer Oberfläche, d.h. feine Titer z.B. unter 2 dtex, oder multilobale Profilfasern z.B. mehrkantige oder sternförmige Profile oder beispielsweise Bändchen- oder Hantelprofile.

Die Fasern können in allen Verarbeitungszuständen, wie z.B. als Monofilamente, als Haufwerk oder Flocke, als Pulp-Aufschlämmung, als lineare Gebilde wie Spinnfasergarn, Multifilamentgarn, Kabel, Reißkabel oder als Flächengebilde aus Stapel- oder Endlosfasern, wie Krempel- oder Kardenvliese, Gelege, Gewebe oder als Maschenware vorliegen.

Besonders bevorzugt sind die erfindungsgemäßen Fasern in Form von Multifilamentgarnen, Kabeln und Vliesen.

Gegenstand dieser Erfindung sind sowohl die ungeladenen Gebilde und Produkte aus diesen Gebilden, wie z.B. Garne, Kabel oder Vliesstoffe, als auch die elektrostatisch geladenen. Dabei ist es unerheblich, ob die Ladung gezielt aufgebracht wurde (z.B. durch Coronaentladung) oder durch triboelektrische Effekte entstanden ist.

Während die verbesserten elektrischen Eigenschaften der erfindungsgemäßen Gebilde im wesentlichen auf dem charakteristischen Elektretverhalten des zu ihrer Herstellung eingesetzten Werkstoffs beruhen, ergeben sich die anwendungstechnischen Vorzüge in ihrer Gesamtheit aus der vorteilhaften Kombination elektrischer, mechanischer und formbedingter Eigenschaften.

Die Verbesserung der Ladungsstabilität korreliert naturgemäß in gewissen Grenzen mit der Konzentration des Ladungsteuermittels in dem Werkstoff der erfindungsgemäßen Gebilde.

Die Konzentration wird so eingestellt, daß die Gebilde gegenüber herkömmlichen eine ausreichende Verbesserung der elektrischen Eigenschaften bei gleichzeitigem Erhalt guter mechanischer Eigenschaften aufweisen.

Die erfindungsgemäßen Elektretgebilde zeigen überraschenderweise einen hohen triboelektrischen Effekt und/oder eine hohe Ladungsbeständigkeit. Dies führt dazu, daß z.B. ein aus diesen Gebilden, insbesondere Fasern, bestehendes oder diese Fasern enthaltendes Staubfilter auch ohne gesonderte elektrische Aufladung (z.B. durch eine Corona-Entladung) bei der Durchströmung mit Gasen (z.B. im Gebrauch) oder durch Reibung an andersartigen festen Materialien eine erheblich höhere elektrostatische Aufladung und damit eine wesentlich bessere Partikelabscheidung erreicht, als ein gleich aufgebautes Staubfilter aus Normalfasern.

Die erfindungsgemäßen Gebilde bestehen in der Regel überwiegend aus dem aromatischen Polyamid, können jedoch auch Zusatzstoffe, wie anorganische Zusatzstoffe, enthalten, die üblicherweise in solchen Polymerzusammensetzungen, wie synthetischen Fasermaterialien, zur Ausbildung spezieller Eigenschaften vorhanden sind.

Die aromatischen Polyamide, die in dem erfindungsgemäß einzusetzenden Werkstoff überwiegend enthalten sind, haben in der Regel inhärente Viskositäten von etwa 2,5 bis 7,0 dl/g.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml. Sie wird für die Zwecke der vorliegenden Erfindung bestimmt an Lösungen von jeweils 0,5 g Polymer in 100 ml 98 gew. %iger Schwefelsäure bei 25 °C.

Das aromatische Polyamid des erfindungsgemäß einzusetzenden Werkstoffs ist üblicherweise lösungsspinnbar.

Die aus Lösungen durch Trocken- oder insbesondere Nassformverfahren geformten aromatischen Polyamide gestatten den Einsatz auch von thermisch weniger stabilen Ladungssteuermitteln, da üblicherweise bei niedrigeren Temperaturen gesponnen wird als beim Schmelzspinnnen.

Der Werkstoff der erfindungsgemäßen Gebilde, insbesondere Elektretfasern, enthält ein Ladungssteuermittel, wie es in Tonern für elektrophotographische Prozesse enthalten ist.

Ladungssteuermittel für elektrophotographische Prozesse sind in großer Zahl aus der Patentliteratur bekannt.

Demgemäß enthält der Werkstoff als Ladungssteuermittel vorzugsweise eine oder verschiedene Verbindungen aus folgenden Klassen:

Triphenylmethane; Ammonium- und Immoniumverbindungen; fluorierte Ammonium- und Immoniumverbindungen; biskationische Säureamide; polymere Ammoniumverbindungen; Diallylammoniumverbindungen; Arylsulfide-Derivate; Phenolderivate; Phosphoniumverbindungen und fluorierte Phosphoniumverbindungen; Calix(n)arene; Metallkomplexverbindungen; Benzimidazolone; oder Azine, Thiazine oder Oxazine, die im Colour Index als Pigments, Solvent Dyes, Basic Dyes oder Acid Dyes aufgeführt sind.

Ladungssteuermittel, die einzeln oder in Kombination miteinander in den erfindungsgemäßen Zusammensetzungen enthalten sind und diesen sehr gute Elektreteigenschaften vermitteln sind insbesondere:

1. Triarylmethan-Derivate wie beispielweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum ganz besonders eignen Colour Index Solvent Blue 125, 66 und 124.

Besonders gut geeignet ist Colour Index Solvent Blue 124 in Form seiner hochkristallinen Modifikation. Weitere Beispiele für zur Herstellung erfindungsgemäßer Elektretfasern gut geeignete Ladungssteuermittel der Triphenylmethan-Reihe sind die in der DE-PS 1 919 724 und der DE-PS 1 644 619 beschriebenen Verbindungen.

Weiterhin Triphenylmethane wie beschrieben in US-A-5 051 585, insbesondere solche der Formel (1)

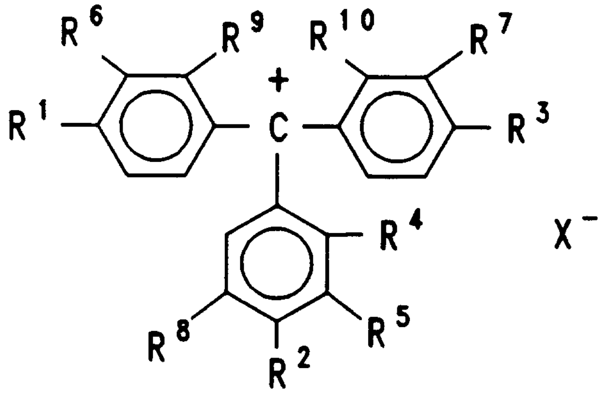

(1)

worin

$R^1$ und $R^3$ gleich oder verschieden sind und $-NH_2$, eine Mono- und Dialkylaminogruppe deren Alkylgruppen 1-4, vorzugsweise 1 oder 2, C-Atome haben, eine Mono- oder Di-omega-hydroxyalkylaminogruppe dere Alkylgruppen 2-4, vorzugweise 2, C-Atome haben, eine ggf. N-Alkylsubstituierte Phenyl- oder Phenalkylaminogruppe deren Alkyl 1-4, vorzugsweise 1 oder 2 C-Atome hat, deren Phenalkylgruppe in der aliphatischen Brücke 1 bis 4, vorzugsweise 1 oder 2 C-Atome hat und deren Penylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,

$R^2$ Wasserstoff ist oder eine der für $R^1$ und $R^3$ genannten Bedeutungen hat,

$R^4$ Wasserstoff, Halogen, vorzugsweise Chlor, oder eine Sulfonsäuregruppe bedeutet oder mit $R^5$ zusammen einen ankondensierten Phenylring bildet,

$R^5$ mit $R^4$ zusammen einen ankondensierten Phenylring bildet,

$R^6$, $R^7$, $R^9$ und $R^{10}$ jeweils Wasserstoff oder einen Alkylrest mit 1 oder 2 C-Atomen, vorzugsweise Methyl bedeuten und

$R^8$ Wasserstoff oder Halogen, vorzugsweise Chlor, ist und

$X^-$ für ein Äquivalent eines Anions steht, insbesondere für ein Chlorid-, Sulfat-, Tetrachloraluminat, Molybdat-, Phosphormolybdat-und Borat-Anionen, wie Tetrafluoro- oder Tetraphenylborat-Anionen.

Besonders bevorzugt ist ein Ladungssteuermittel der Formel (1) worin $R^1$ und $R^3$ Phenylaminogruppen $R^2$ eine m-Methyl-phenylaminogruppe und die Reste $R^4$ bis $R^{10}$ alle Wasserstoff sind.

2. Ammonium- und Immoniumverbindungen wie beschrieben in US-A-5 015 676.

3. Fluorierte Ammonium- und Immoniumverbindungen wie beschrieben in US-A-5 069 994, insbesondere solche der Formel (3)

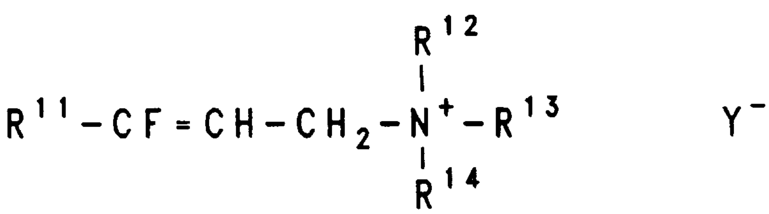

(3)

worin

$R^{11}$ perfluoriertes Alkyl mit 5-11 C-Atomen,

$R^{12}$, $R^{13}$ und $R^{14}$ gleich oder verschieden sind und Alkyl mit 1-5, vorzugsweise 1-2 C-Atomen bedeuten,

$Y^-$ ein Äquivalent eines Anions, vorzugsweise eines Tetrafluoborat- oder Tetra-Phenylborat-Anions ist.

Vorzugsweise bedeutet

$R^{11}$ perfluoriertes Alkyl mit 5-11 C-Atomen,

$R^{12}$ und $R^{13}$ Ethyl und

$R^{14}$ Methyl

4. Biskationische Säureamide wie beschrieben in PCT-A-91/10172, insbesondere solche der Formel (4)

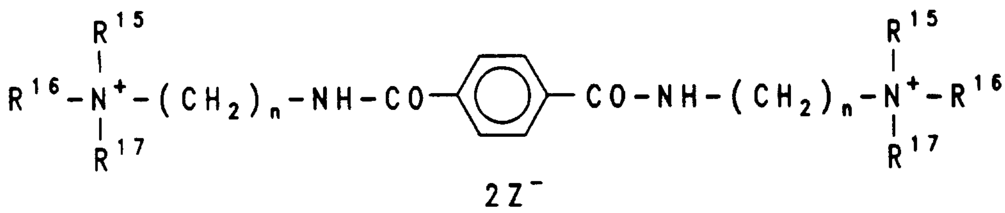

(4)

worin
$R^{15}$, $R^{16}$ und $R^{17}$ gleiche oder verschiedene Alkylreste mit 1-5 C-Atomen, vorzugsweise Methyl sind,
n für eine ganze Zahl von 2 bis 5 steht,
und $Z^-$ für ein Äquivalent eines Anions steht, vorzugsweise für ein Tetraphenylborat-Anion.

5. Diallylammoniumverbindungen wie beschrieben in DE-A-4 142 541, insbesondere solche der Formel (5)

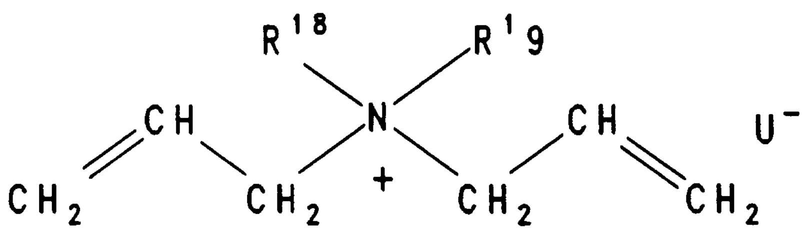

(5)

worin
$R^{18}$ und $R^{19}$ gleiche oder verschiedene Alkylgruppen mit 1-5, vorzugsweise 1 oder 2, C-Atomen, bedeuten, insbesondere aber für Methylgruppen stehen und $U^-$ für ein Äquivalent eines Anions steht, vorzugsweise für ein Tetraphenylborat-Anion steht, sowie
die aus diesen erhältlichen polymeren Ammoniumverbindungen der Formel (6) (wie beschrieben in DE-A-4 029 652 oder der DE-A-4 103 610),

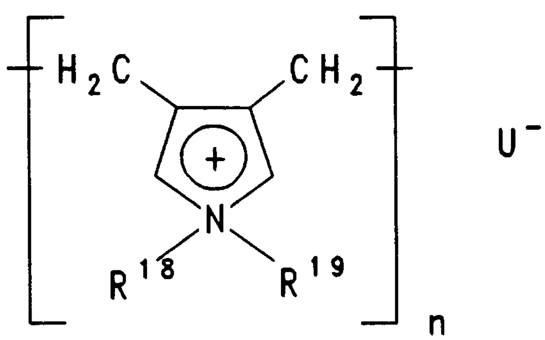

(6)

worin n einen Wert hat, der Molekulargewichten von 5000 bis 500000 entspricht. Besonders bevorzugt sind jedoch Verbindungen der Formel (6) mit Molekulargewichten von 40000 bis 400000.

6. Arylsulfide-Derivate wie beschrieben in DE-A-4 031 705, insbesondere solche der Formel (7)

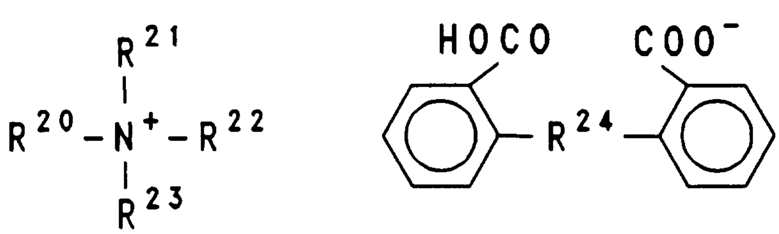

(7)

worin
$R^{20}$, $R^{21}$, $R^{22}$ und $R^{23}$ gleiche oder verschiedene Alkylgruppen mit 1-5, vorzugsweise 2 oder 3, C-Atomen, bedeuten und
$R^{24}$ einer der zweiwertigen Reste -S-, -S-S-, -SO- oder $-SO_2-$ ist.
Beispielsweise sind $R^{20}$ bis $R^{23}$ Propylgruppen und $R^{24}$ die Gruppe -S-S-.
7. Phenolderivate wie beschrieben in EP-A-0 258 651, insbesondere solche der Formel (8)

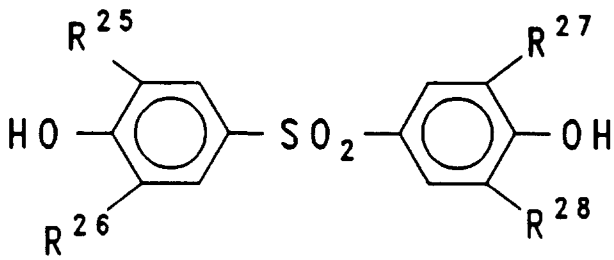

(8)

worin
$R^{25}$ und $R^{27}$ Alkyl- oder Alkenylgruppen mit 1 bis 5, vorzugsweise 1 bis 3 C-Atomen und $R^{26}$ und $R^{28}$ Wasserstoff oder Alkyl mit 1 bis 3, vorzugsweise Methyl bedeuten.

Als Beispiel seien genannt die Verbindungen in denen $R^{25}$ bis $R^{28}$ Methylgruppen sind oder in denen $R^{26}$ und $R^{28}$ Wasserstoff sind und $R^{25}$ und $R^{27}$ für die Gruppe $-CH_2-CH = CH_2$ stehen.
8. Phosphoniumverbindungen und fluorierte Phosphoniumverbindungen wie beschrieben in US-A-5 021 473 und in US-A-5 147 748, insbesondere solche der Formeln (9)

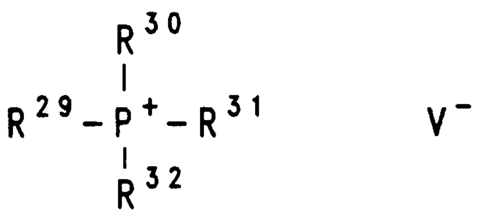

(9)

worin
$R^{29}$, $R^{30}$, $R^{31}$ und $R^{32}$ gleiche oder verschiedene Alkylgruppen mit 1-8, vorzugsweise 3 bis 6, C-Atomen, bedeuten und $V^-$ für ein Äquivalent eines Anions steht, vorzugsweise für ein Halogenid-Anion
und (10);

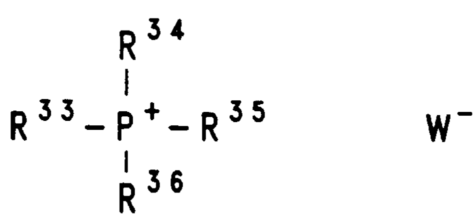

(10)

worin
$R^{33}$ ein hochfluorierter Alkylrest mit 5-15, vorzugsweise 6-10, C-Atomen, und
$R^{34}$, $R^{35}$ und $R^{36}$ Alkyl mit 3-10 C-Atomen oder Phenyl sind und
$W^-$ für das Äquivalent eines Anions steht.

Als Beispiel für eine Verbindung der Formel (9) sei genannt Tetrabutylphosphonium-bromid, als Beispiele für Verbindungen der Formel (10) seien genannt die Verbindungen mit $R^{33} = C_8F_{17}-CH_2-CH_2-$, $R^2 = R^3 = R^4$ = Phenyl und $W^- = PF_6-$ oder das Tetraphenylborat-Anion.
9. Calix(n)arene wie beschrieben in EP-A-0 385 580 und EP-A-0 514 867 und wie beschrieben in EP-A-0 516 434, insbesondere solche der Formel (11)

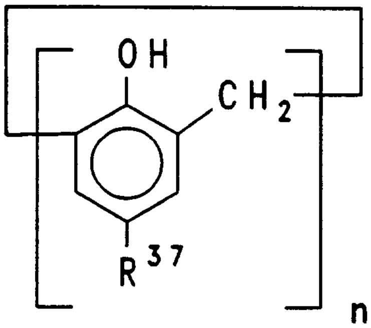

(11)

worin
$R^{37}$ für Wasserstoff, Halogen, vorzugsweise Chlor, geradkettiges oder verzweigtes Alkyl mit 1-12 C-Atomen, Aralkyl, z.B. Benzyl oder Phenethyl, Cyclohexyl, $-NO_2$, $-NH_2$, $-NHR^{38}$ oder $-NR^{38}R^{39}$ steht, wobei $R^{38}$ und $R^{39}$ Alkyl mit 1-8 C-Atomen, ggf. substituiertes Phenyl oder $-Si(CH_3)_3$ bedeuten.
10. Metallkomplexverbindungen, wie Chrom-, Kobalt-, Eisen-, Zink- oder Aluminium-Azokomplexe oder Chrom-, Kobalt-, Eisen-, Zink- oder Aluminium-Salicylsäurekomplexe der Formeln (12), (13) und (14)

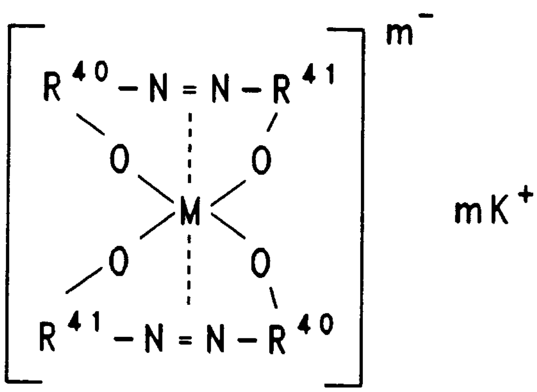

(12)

worin
M ein 2- oder 3-wertiges Metallatom, vorzugsweise Chrom, Kobalt, Eisen, Zink oder Aluminium bedeutet, $R^{40}$ und $R^{41}$ für zweibindige aromatische Ringe, vorzugsweise der Formeln

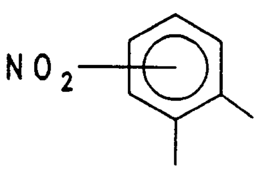 , 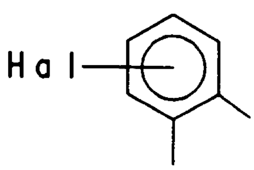 oder 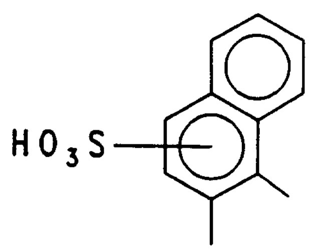

stehen, Hal Halogen bedeutet, m eine der Zahlen 1 oder 2 ist und $K^+$ ein Äquivalent eines Kations ist,

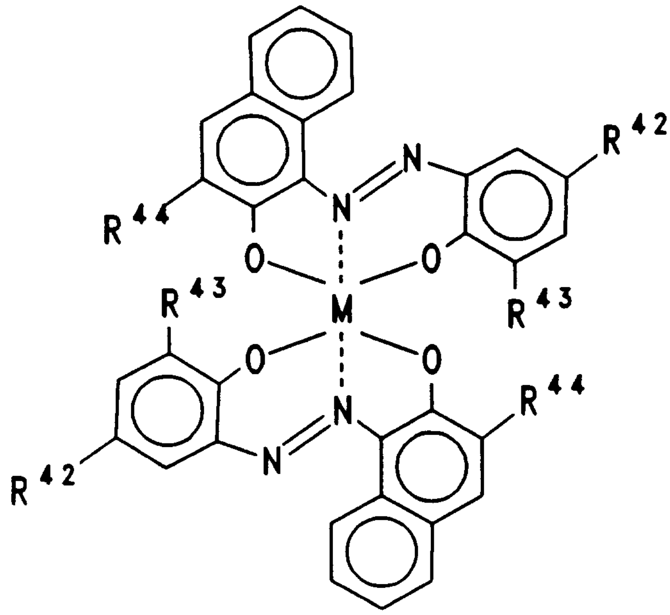

Q (13)

worin
M ein 2- oder 3-wertiges Metallatom, vorzugsweise Chrom, Kobalt, Eisen,
$R^{42}$ Wasserstoff, Halogen, vorzugsweise Cl, Nitro oder Amidosulfonyl
$R^{43}$ Wasserstoff oder Nitro,
$R^{44}$ Wasserstoff, die Sulfonsäuregruppe, -CO-NH-$R^{45}$ ist, wobei $R^{45}$ = Phenyl, Alkyl mit 1-5 C-Atomen, das ggf. durch eine Mono-, Di- oder Trialkylaminogruppe substituiert sein kann und
Q ein Gegenion ist, das die Neutralität des Komplexes herstellt, vorzugsweise ein Proton, ein Alkali- oder ein Ammonium-Ion,

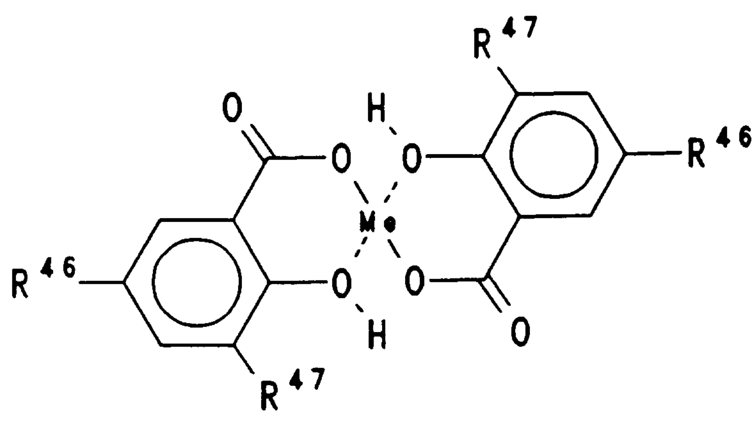

(14)

worin
Me ein zweiwertiges Metall-Zentralatom, vorzugsweise ein Zinkatom,
$R^{47}$ und $R^{46}$ gleiche oder verschiedene, geradkettige oder verzweigte Alkylgruppen mit 1-8, vorzugsweise 3-6 C-Atomen, beispielsweise tert. Butyl, bedeuten.

Derartige Verbindungen sind beschrieben in EP-A-0 162 632, US-A-4 908 225, EP-A-0 393 479, EP-A-0 360 617, EP-A-0 291 930, EP-A-0 280 272, EP-A-0 255 925, EP-A-0 251 326, EP-A-0 180 655, EP-A-0 141 377, US-A-4 939 061, US-A-4 623 606, US-A-4 590 141 und/oder charakterisiert durch die CAS-Nummern 31714-55-3, 104815-18-1, 84179-68-8, 110941-75-8, 32517-36-5, 38833-00-00, 95692-86-7, 85414-43-3, 136709-14-3, 135534-82-6, 135534-81-5, 127800-82-2, 114803-10-0, 114803-08-6.

Beispiele für besonders bevorzugte Metallkomplexverbindungen der obigen Formel 13 sind in der folgenden Tabelle angegeben.

Tabelle

| $R^{42}$ | $R^{43}$ | $R^{44}$ | $R^{45}$ | M | Q |
|---|---|---|---|---|---|
| Cl | H | H | - | Cr | $H^+$ |
| $NO_2$ | $NO_2$ | $-CONHR^{45}$ | Phenyl | Cr | $H^+/Na^+/NH_4^+$ |
| Cl | H | $-CONHR^{45}$ | Phenyl | Fe | $H^+/Na^+/NH_4^+$ |
| Cl | H | $-CONHR^{45}$ | $-(CH_2)_3-$ $-N^+(CH_3)_3$ | Cr | $Cl^-$ |
| $-SO_2NH_2$ | H | H | - | Co | $H^+/Na^+/NH_4^+$ |

11. Benzimidazolone wie beschrieben in EP-A-0 347 695, insbesondere solche der Formel (15)

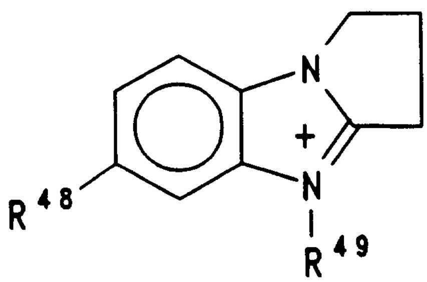

$T^-$ (15)

worin,
$R^{48}$ Alkyl mit 1-5 C-Atomen und $R^{49}$ Alkyl mit 1-12 C-Atomen
und T ein Äquivalent eines Anions, insbesondere ein Chlorid- oder Tetrafluoborat-Anion ist.
Als Beispiel sei genannt die Verbindung mit $R^{48}$ = $CH_3$ und $R^{49}$ = $C_{11}H_{23}$ oder Azine der folgenden Colour Index-Nummern: C.I. Solvent Black 5, 5:1, 5:2, 7, 31 und 50; C.I. Pigment Black 1, C.I. Basic Red 2 und C.I. Basic Black 1 und 2 und C.I. Oxidation Base 1; oder Thiazine der folgenden Colour Index Nummern: C.I. Basic Blue 9, 24 oder 25 und
C.I. Solvent Blue 8; oder Oxazine der Colour Index Nummern C.I. Pigment Violet 23, C.I. Basic Blue 3, 10 oder 12; sowie die im Colour Index unter Basic Dye oder Acid Dye aufgeführten Azine, Thiazine und Oxazine.

Vorzugsweise enthält der Werkstoff als Ladungssteuermittel eine oder mehrere verschiedene Verbindungen aus folgenden Klassen:
Triphenylmethane der Formel (1); fluorierte Ammoniumverbindungen der Formel (3); Diallylammoniumverbindungen der Formel (5) und die daraus erhältlichen polymeren Ammoniumverbindungen der Formel (6); Arylsulfide-Derivate der Formel (7); Metallkomplexverbindungen der Formeln (12) und (13).

Besonders bevorzugt sind erfindungsgemäße Zusammensetzungen enthaltend als Ladungssteuermittel eine Verbindung der Formel (I), worin $R^1$ und $R^3$ Phenylamino und $R^2$ 3-Methyl-phenylamino und $X^-$ ein Sulfatäquivalent ist. Diese Verbindung, bekannt als C.I. Solvent Blue 124, entspricht der folgenden Formel (16):

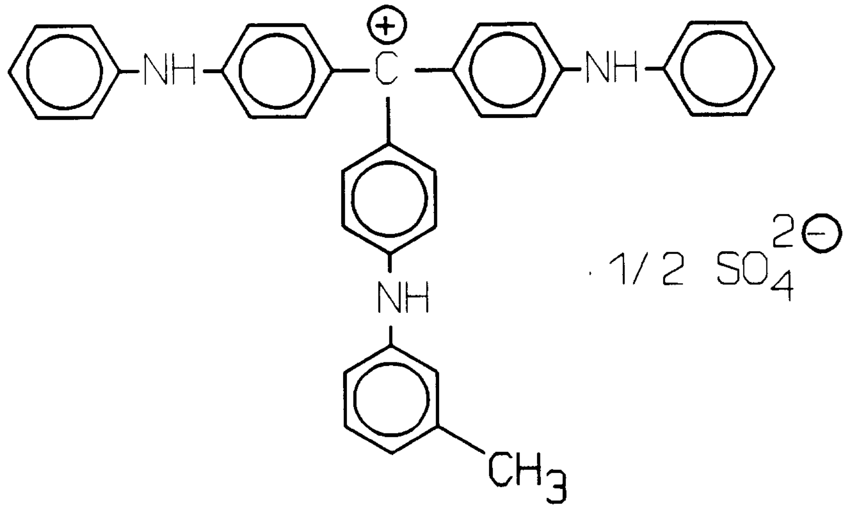

(16)

Besonders bevorzugt sind auch erfindungsgemäße Zusammensetzungen enthaltend als Ladungssteuermittel eine Verbindung der Formel (3), worin $R^{11}$ einen perfluorierten Alkylrest mit 5 bis 11 Kohlenstoffatomen und $Y^-$ Tetraphenylborat oder Tetrafluoroborat, oder eine Verbindung der Formel (5) oder (6), worin $R^{18}$ und $R^{19}$ Methyl und $U^-$ ein Tetraphenylborat-Anion ist.

Weiterhin sind besonders bevorzugt erfindungsgemäße Zusammensetzungen enthaltend als Ladungssteuermittel eine Verbindung der Formel (7), worin $R^{20}$, $R^{21}$, $R^{22}$ und $R^{23}$ Propyl und $R^{24}$ eine Disulfid-Brücke ist, oder der Formel (13), worin $R^{42}$ Chlor, $R^{43}$ Wasserstoff und Q ein Proton ist.

Die vielseitigen Anwendungsmöglichkeiten der erfindungsgemäßen Elektretgebilde werden ermöglicht durch die Kombination der oben beschriebenen Werkstoffzusammensetzung mit den durch die bei der Formgebung angewendeten Bedingungen einzustellenden Eigenschaften der Elektretgebilde, insbesondere der textiltechnischen Daten der Fasern. Es ist dabei überraschend, daß die Elektretfasern sich mit praktisch der gleichen Bandbreite textiltechnischer Eigenschaften herstellen lassen, wie die Fasern die aus dem entsprechenden Polymer ohne Ladungssteuermittel-Zusatz hergestellten wurden.

Die erfindungsgemäßen Fasern weisen üblicherweise Reißfestigkeiten von 25 bis 280 cN/tex, Reißdehnungen von 2 bis 10 % und Anfangsmoduli von 20 bis 150 N/tex auf.

Die textiltechnischen Daten, wie Reißfestigkeit, Dehnung und Anfangsmodul, können bei der Herstellung durch Einstellung der Polymerzusammensetzung sowie der Verstreckung bedarfsgerecht gesteuert werden.

Die erfindungsgemäßen Elektretfasern können einen Präparationsauftrag von 0 bis 0,3 Gew.-%, vorzugsweise 0 bis 0,2 Gew.% aufweisen. Eine bevorzugte Ausführungsform präparierter erfindungsgemäßer Elektretfasern besteht darin, daß sie eine hydrophobe Präparation aufweisen, insbesondere eine solche, die als hydrophobierendes Agenz Wachs, ein Fluortensid und/oder ein Fluorpolymer wie z.B. Polytetrafluorethylen, enthält.

Wie oben bereits angedeutet können die erfindungsgemäßen Elektretgebilde in verschiedenen Formen als lineare oder flächenförmige Gebilde vorliegen. Insbesondere können sie in Form von Multifilamentgarnen, Kabel und Vliesen vorliegen.

Selbstverständlich können die erfindungsgemäßen Fasern auch in Mischungen mit anderen synthetischen aber auch natürlichen Fasern vorliegen, wobei sich die Nicht-Elektretfasern nicht nur bezüglich ihrer elektrischen Eigenschaften, sondern auch bezüglich ihrer üblichen textiltechnischen Eigenschaften, wie Reißfestigkeit, Reißdehnung, Schrumpfverhalten u.s.w. von den erfindungsgemäßen Fasern unterscheiden können.

Die Vliese aus den erfindungsgemäßen Fasern stellen eine besonders wertvolle Ausführungsform der Erfindung dar, da sie insbesondere als Filtermaterial eingesetzt werden können.

Die erfindungsgemäßen Gebilde, insbesondere Elektretfasern, können selbstverständlich auch in Kombination mit einem Nichtelektret-Material als Zwei- oder Mehrkomponentengebilde vorliegen.

Die Copolymerisation der erfindungsgemäß zu verformenden aromatischen Polyamide wird im allgemeinen als Lösungspolymerisation ausgeführt.

Dazu werden die miteinander umzusetzenden aromatischen monomeren Verbindungen in der Regel in einem organischen Lösungsmittel gelöst. Das organische Lösungsmittel enthält dabei vorzugsweise zumindest ein Lösungsmittel vom Amidtyp, wie weiter oben beschrieben.

Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Polykondensation einzuleiten.

Dabei wird das Amid-Lösungsmittel nicht nur als Lösungsmittel für die aromatischen monomeren Verbindungen und das daraus erhaltene aromatische Polyamid sondern auch als Säureakzeptor für ein Wasserstoffhalogenid verwendet, z. B. für Chlorwasserstoff, der als Nebenprodukt der Polykondensation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Polykondensationsmischung vor, während oder nach der Polykondensation zugesetzt wird.

Beispiele für solche Zusatzstoffe sind Alkalimetallhalogenide, wie Lithiumchlorid oder Erdalkalimetallhalogenide, wie Kalziumchlorid.

Die Polykondensationstemperaturen liegen bei der Lösungspolymerisation üblicherweise zwischen -20 und +120 °C, bevorzugt zwischen +10 und +100 °C. Besonders gute Ergebnisse werden bei Reaktionstemperaturen zwischen +10 und +80 °C erzielt.

Die Summe der Konzentrationen der aromatischen monomeren Verbindungen in der Polykondensationsgemischlösung kann unter Beachtung des gewünschten Polykondensationsgrades, der gewünschten Viskosität des Polymerisationsgemisches, der Art der verwendeten aromatischen monomeren Verbindungen, der Art des verwendeten Lösungsmittels und der gewünschten Polykondensationstemperatur eingestellt werden. Die günstigste Summe der Konzentrationen kann dabei aufgrund einer Reihe von Vorversuchen für den Ablauf der Polykondensation ermittelt werden.

Polykondensationsreaktionen werden vorzugsweise so ausgeführt, daß nach Abschluß der Reaktion 2 bis 15, vorzugsweise 5 bis 12 Gew.-% an Polykondensat in der Lösung vorliegen.

Im Verlauf der Polykondensation wächst das Molekulargewicht des Polymers und damit auch die Viskosität des Reaktionsansatzes an.

Wenn die Polymerlösung die zur Weiterverarbeitung erforderliche Viskosität erreicht hat, kann die Polykondensation in üblicher Weise durch Zugabe von monofunktionellen Verbindungen, wie z. B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumhydroxyd, insbesondere aber Calciumoxid.

Das bei Durchführung des Herstellungsverfahrens erhaltene aromatische Polyamid kann aus dem Polykondensationsgemisch durch ein Trennverfahren abgeschieden werden, beispielsweise durch Präzipitation. Zur Herstellung einer Lösung für das Ausformen des Polyamids wird das so gewonnene aromatische Polyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Polyamids das Verfahren der Lösungspolykondensation angewandt wird, wird das Polyamid, weil es in dem Lösungsmittel für die Polykondensation hervorragend löslich ist, in diesem jedoch vollständig gelöst. Daher ist es bei industriellem Einsatz des Herstellungsverfahrens vorteilhaft, daß bei der Polykondensation erhaltene Gemisch sofort als Ausformlösung für das aromatische Polyamid zu verwenden.

Bei dem Verfahren zum Herstellen der Ausformlösung des aromatischen Polyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Polyamids in einem Bereich zwischen 4 und 15 Gew.-%, insbesondere zwischen 5 und 12 Gew.-% gehalten wird. Wenn es erforderlich ist, kann die Spinnlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Calciumchlorid oder Magnesiumbromid, und zwar in einer Konzentration zwischen 0,2 und 10 %, vorzugsweise zwischen 0,5 und 5 %, bezogen auf das Gesamtgewicht der Formlösung. Der Zusatzstoff zur Förderung der Löslichkeit fördert dabei auch die Stabilität der Ausformlösung bei erhöhter Temperatur.

Die Ladungssteuermittel können in die Ausformlösung entweder gelöst oder suspendiert oder dispergiert im jeweiligen Lösungsmittel eingearbeitet werden, wobei die Ladungssteuermittel auch auf ein geeignetes Trägermaterial aufgezogen bzw. in ein geeignetes Bindemittel eingearbeitet werden können.

Die Einarbeitung der Ladungssteuermittel kann in die Ausformlösung enthaltend Lösungsmittel und aromatisches Polyamid erfolgen oder bereits bei der Lösungspolykondensation des aromatischen Polyamids erfolgen.

Die Formgebung der Ausformlösung zu den erfindungsgemäßen geformten Gebilden kann nach jedem geeigneten Trockenverfahren, Naßverfahren oder Trocken-Naßverfahren erfolgen. In den Fällen, in denen ein Naßverfahren angewandt wird, wird die Ausformlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Polyamids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0 °C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration von weniger als 70 Gew.-%, insbesondere weniger als 50 Gew.-% vor.

Bei der Herstellung von Fasern aus dem aromatischen Polyamid wird die Spinnlösung durch einen Spinnkopf mit einer oder mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z. B. in der US-A-34 14 645 beschrieben ist. Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt.

Beim Naßspinnen eines aromatischen Polyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100 °C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid in Analogie zu üblichen Ausformverfahren und -vorrichtungen ohne weiteres zu geformten Gebilden verarbeitet werden kann, ohne daß ein gefährliches oder schädliches Lösungsmittel, wie z. B. konzentrierte Schwefelsäure, verwendet werden müßte. Hierdurch werden die Gefahren für das Bedienungspersonal verringert.

Die erfindungsgemäß hergestellten geformten Gebilde werden gewöhnlich einem Streckvorgang unterworfen, durch den nicht nur die mechanischen Eigenschaften, wie z. B. die Zugfestigkeit und der Elastizitätsmodul, gefördert werden sondern auch die thermischen Eigenschaften, wie z. B. die thermische Stabilität der so hergestellten Gebilde.

Filamente werden in der Regel verstreckt, um die mechanische Festigkeit und den Elastizitätsmodul zu erhöhen. Das Verstreckungsverhältnis beträgt dabei üblicherweise etwa 1:2 bis 1:20. Die Verstrecktemperatur liegt dabei in der Regel zwischen 200 und 500 °C, vorzugsweise zwischen 300 und 480 °C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern.

Die vorliegende Erfindung betrifft auch ein Verfahren zur Herstellung der erfindungsgemäßen geformten Gebilde umfassend die Schritte

a) Herstellen einer Ausformlösung enthaltend organisches Lösungsmittel, in organischen Lösungsmitteln lösliches aromatisches Polyamid und 0,01 bis 30 Gew.-%, bezogen auf das Gewicht der Festanteile, organische oder metallorganische Ladungssteuermittel,

b) Extrudieren der Ausformlösung durch eine Düse, welche Öffnungen in vorgegebener Anzahl und Form enthält, so daß das gewünschte geformte Gebilde entsteht, und

c) Entfernen des organischen Lösungsmittels in an sich bekannter Weise, so daß ein lösungsmittelärmeres oder -freies geformtes Gebilde entsteht, das eine für die weitere Verarbeitung ausreichende mechanische Stabilität und Klebfreiheit aufweist.

Bei Schritt c) kann es sich um ein Verdampfen des Lösungsmittels unter Anwendung erhöhter Temperatur handeln, so daß ein lösungsmittelärmeres geformtes Gebilde entsteht, das eine für die weitere Verarbeitung ausreichende mechanische Stabilität und Klebfreiheit aufweist (Trockenformverfahren).

Vorzugsweise handelt es sich bei Schritt c) um ein Einbringen des primären geformten Gebildes in ein Bad enthaltend eine Koagulationsflüssigkeit, so daß das organische Lösungsmittel aus besagtem primärem geformten Gebilde entfernt wird und das gewünschte geformte Gebilde duch Koagulation des Primärgebildes entsteht, das eine für die weitere Verarbeitung ausreichende mechanische Stabilität aufweist (Naßformverfahren).

Das Einbringen kann durch direktes Extrudieren in eine Koagulationsflüssigkeit erfolgen oder durch das Extrudieren in eine Koagulationsflüssigkeit nach Durchlaufen eines Luftspaltes vorbestimmter Länge.

Die erfindungsgemäßen Elektretfasern können auch mit allen bekannten Texturierungen versehen werden. So ist es möglich, die Filamente, vorzugsweise in Kabelform, einer Stauchkammerkräuselung zu unterwerfen.

Eine besonders bevorzugte Form für die erfindungsgemäßen Fasern ist, wie bereits oben gesagt, die Form von Vliesen.

Diese Vliese können nämlich mit besonderem Vorteil zur Herstellung hochwirksamer und besonders langlebiger Staubfilter, insbesondere von Feinstaubfiltern, eingesetzt werden.

Überraschenderweise wurde gefunden, daß es gelingt, hohe textiltechnische Eigenschaften, insbesondere Stabilität und eine sehr variable Konstruktion mit einer sehr beachtlichen Verlängerung der Halbwertszeit der elektrischen Ladung und/oder einer hohen triboelektrischen Aufladung zu kombinieren, wenn das Fasermaterial des Vliesstoffs erfindungsgemäße Fasern enthält oder daraus besteht.

Ein Gegenstand der vorliegenden Erfindung ist somit ein Vliesstoff, der aus Synthesefasern besteht oder solche enthält, wobei dieser Vliesstoff zumindest zum Teil aus erfindungsgemäßen Fasern aufgebaut ist.

Der Anteil der erfindungsgemäßen Elektretfasern im Vliesstoff, der diesem die gewünschte Eigenschaftskombination vermittelt, kann u.U. überraschend klein sein.

Oft ergibt sich ein merklicher wirtschaftlicher und technischer Vorteil bereits bei einem Vliesstoff, der mindestens 10 % erfindungsgemäße Elektretfasern enthält.

In der Regel ist es zweckmäßig, einen Vliesstoff einzusetzen, der 50 bis 100 % Elektretfasern enthält, wobei die höchsten technischen Anforderungsprofile naturgemäß mit Vliesstoffen erfüllt werden können, die zu 100 % aus Elektretfasern bestehen.

Die Titer der Synthesefasern des in der erfindungsgemäßen Vliesstoffen und der ggf. daraus hergestellten Erzeugnisse, insbesondere der Staubfilter, liegen in dem für diese Anwendungen üblichen Bereich.

Von Fall zu Fall kann es zweckmäßig sein, Mischtiter einzusetzen, insbesondere können bei solchen Vliesstoffen, die nicht zu 100 % aus Elektretfasern bestehen, Elektretfasern und Normalfasern verschiedene Titer haben.

Die Synthesefasern können Endlosfasern oder Stapelfasern, üblicherweise mit Stapellängen von 0,2 bis 200 mm, sein.

Stapelfasern mit Stapellängen unter 20 mm werden zweckmäßigerweise zu Vliesen durch Naßlegeverfahren, Stapelfasern mit Stapellängen über 20 mm werden zweckmäßigerweise durch Kardieren zu Vliesen verarbeitet.

Weiterhin kann es zweckmäßig sein Vliese herzustellen aus Mischungen von zwei oder mehreren Sorten erfindungsgemäßen Elektretfasern, wobei jede Sorte ein anderes der oben genannten Ladungssteuermittel enthält.

Selbstverständlich können auch Mischungen von erfindungsgemäßen Elektret-Stapelfasern und anderen Stapelfasern zu einem Faservlies verarbeitet werden.

Diese Verarbeitung kann, wie üblich, durch trockenes oder nasses Ablegen erfolgen. Das Trockenlegen der Stapelfasern erfolgt in der Regel auf der Krempel.

Die gegebenenfalls neben den erfindungsgemäßen Elektretfasern in den erfindungsgemäßen Vliesen einzusetzenden Synthesefasern können aus beliebigen spinnfähigen Polymeren bestehen, insbesondere aus Polyamid, Polyacrylnitril, Polyethylen, Polypropylen oder Polyester. Diese Synthesefasern können selbstverständlich auch organische oder metallorganische Ladungssteuermittel, wie oben definiert, enthalten.

Die Verfestigung der Vliesstoffe kann prinzipiell in jeder bekannten Weise erfolgen. So ist es beispielsweise möglich, das Vlies durch einen Binder zu verfestigen mit dem das Vlies imprägniert wird und der anschließend ausgehärtet wird oder der Binder kann ein Schmelzbinder sein, der z.B. in Pulverform oder in Form von Binderfäden in das Vlies eingearbeitet wird, und der das Vlies unter Wärmeeinwirkung zum Vliesstoff verfestigt.

Die Verfestigung des Vlieses zum Vliesstoff kann auch durch Kalandrierung erfolgen, wobei teils eine mechanische Verfilzung der Filamente, teils eine Verschweißung an den Kreuzungspunkten eintritt.

Das Schmelzkleber-Material kann selbstverständlich auch als eine Komponente einer Seite-an-Seite Bikomponentenfaser oder als Mantel einer Kern-Mantel-Bikomponentenfaser in das Vlies eingebracht werden.

Als vorteilhaft haben sich erfindungsgemäße Vliesstoffe erwiesen, die mechanisch verfestigt worden ist. Unter einer mechanischen Verfestigung ist zum Beispiel das Nadeln zu verstehen oder auch z.B. hydromechanische Verfestigung, wie sie z.B. in der EP-A-0 108 621 beschrieben ist.

Eine Kombination der verschiedenen Verfestigungsarten kann nach Bedarf ebenfalls erfolgen.

Das Flächengewicht der erfindungsgemäßen Vliesstoffe richtet sich natürlich nach dem geplanten Einsatz. In der Regel liegt es bei 5 bis 300 g/m$^2$, vorzugsweise bei 100 bis 250 g/m$^2$, kann aber für besondere Aufgaben auch darüber z.B. bei bis zu 1000 g/m$^2$ liegen.

Gegebenenfalls kann der Vliesstoff auch mit einem anderen Textilmaterial z.B. einem weiteren Vliesstoff oder einem Textilmaterial definierter Garnlage, das ebenfalls aus Elektretfasern bestehen oder solche enthalten kann, kombiniert werden.

Insbesondere ist gelegentlich die Kombination mit stützenden und verstärkenden oder auch schützend abdeckenden Textilmaterialien erwünscht. In einer bevorzugten Ausführungsform werden die erfindungsgemäßen elektretfaserhaltigen Vliese ein- oder insbesondere beidseitig mit einem schützenden Textilmaterial, z.B. einem Vliesstoff, insbesondere einem Feinvlies abgedeckt.

Insbesondere beim Einsatz der erfindungsgemäßen Vliese als Staubfilter ist oft die Kombination mit Grob- oder Tiefenfiltern zweckmäßig.

Die vorliegende Erfindung betrifft auch ein Verfahren zur Herstellung der erfindungsgemäßen Vliesstoffe durch Wirrablage von synthetischen Endlos- oder Stapelfasern in an sich bekannter Weise (Vergl.: "Radko Krcema, Handbuch der Textilverbundstoffe", Deutscher Fachverlag GmbH (1970), Seite 53) auf einer bewegten Unterlage, oder durch Vliesbildung aus Stapelfasern auf der Krempel oder Karde, anschließende Verfestigung, das dadurch gekennzeichnet ist, daß zumindest ein Teil der abgelegten Synthesefasern Elektretfasern sind enthaltend als fadenbildendes Polymer in organischen Lösungsmitteln lösliches aromatisches Polyamid und 0,01 bis 30 Gew.-%, bezogen auf das Gewicht der Faser, organische oder metallorganische Ladungssteuermittel.

Bei der Herstellung von Vliesstoffen, die erfindungsgemäß einen Anteil von Elektretfasern enthalten, kann eine Mischung von Elektretfasern und normalen Stapelfasern im gewünschten Mischungsverhältnis in an sich bekannter Weise trocken oder nach einem Naßlegeverfahren zum Vlies abgelegt und anschließend verfestigt werden.

Die Vliese, welche aus den erfindungsgemäßen Elektretfasern bestehen oder einen wirksamen Anteil an solchen enthalten, werden - wie bereits oben gesagt - mit besonderem Vorteil zur Herstellung von Filtern benutzt.

Ein Gegenstand der vorliegenden Erfindung ist daher auch diese Anwendung der Elektretfasern und der sie enthaltenden Textilmaterialien insbesondere Vliesstoffe.

Aus herstellungstechnischen Gründen kann es vorteilhaft sein, die Fasern vor der Vliesbildung mit einer antistatischen Präparation zu versehen, die erst am Ende des Herstellprozesses, z.B. nach dem Konfektionieren der Filter, ausgewaschen wird.

Die folgenden Beispiele erläutern die Erfindung ohne diese zu begrenzen.

Beispiele 1 bis 4 Herstellung von Fasern aus aromatischen Polyamiden und Ladungssteuermitteln

Es wurden Spinnlösungen aus N-Methylpyrrolidon (NMP) hergestellt, die jeweils 0,06 Gew. %, bezogen auf die Spinnlösung, eines aromatischen Polyamids aus 100 Mol % Terephthaloylchlorid, 50 Mol % 3,3'-Dimethylbenzidin (o-Tolidin), 25 Mol % para-Phenylendiamin und 25 Mol % 1,4-Bis-(4-aminophenoxy)-benzol und jeweils 2 Gew. %, bezogen auf die Spinnlösung, von Calciumhydroxid bzw. Calciumchlorid (Beispiel 4) als Lösungsvermittler enthielten.

Die Spinnlösung nach Beispiel 1 (Vergleichsprobe) enthielt keine weiteren Zusätze.

Die Spinnlösung nach Beispiel 2 enthielt zusätzlich 0,06 Gew. %, bezogen auf die Spinnlösung, eines Ladungssteuermittels der oben definierten Formel (3), worin $R^{11}$ $-(CF_2-CF_2)_n-CF_3$ mit n = 2-5 bedeutet, $R^{12}$ und $R^{14}$ Ethyl und $R^{13}$ Methyl bedeuten, sowie $Y^-$ ein Tetraphenylborat-Anion ist.

Die Spinnlösung nach Beispiel 3 enthielt zusätzlich 0,06 Gew. %, bezogen auf die Spinnlösung, eines Ladungssteuermittels der oben definierten Formel (6), worin $R^{18}$ und $R^{19}$ Methyl bedeuten und $X^-$ ein Tetraphenylborat-Anion ist,

dessen mittleres Molekulargewicht, bestimmt über die Messung der Lösungsviskosität, bei 25 °C etwa

300000 beträgt und das einen Schmelzpunkt von 225 °C aufweist.

Die Spinnlösung nach Beispiel 4 enthielt zusätzlich 0,11 Gew. %, bezogen auf die Spinnlösung, eines Ladungssteuermittels der oben definierten Formel (16), das als C.I. Solvent Blue 124 bekannt ist.

Die Einarbeitung des Ladungssteuermittels nach Beispiel 2 erfolgte durch Zudosierung einer verdünnten Polymerlösung aus NMP, 2 Gew. % Aramid und 2,5 Gew. % Ladungssteuermittel zu einer Polymerlösung aus NMP und 6 Gew. % Aramid vor der Spinndüse in einem Verhältnis, so daß die oben angegebene Menge an Ladungssteuermittel in der Spinnlösung erreicht wurde.

Die Einarbeitung des Ladungssteuermittels nach Beispiel 3 erfolgte durch Zudosierung des Ladungssteuermittels in die Polykondensationslösung bei der Herstellung des Aramids.

Die Einarbeitung des Ladungssteuermittels nach Beispiel 4 erfolgte durch Zudosierung einer verdünnten Polymerlösung aus NMP, 2 Gew. % Aramid und 5 Gew. % Ladungssteuermittel zu einer Polymerlösung aus NMP und 6 Gew. % Aramid vor der Spinndüse in einem Verhältnis, so daß die oben angegebene Menge an Ladungssteuermittel in der Spinnlösung erreicht wurde.

Die Spinnlösungen wurden naß versponnen und bei Temperaturen von 240 - 250 °C im Verhältnis 1 : 2 verstreckt.

Die erhaltenen Multifilamente wurden anschließend zu einem Strang von etwa 10000 dtex gefacht, gekräuselt und geschnitten. Die eingestellte Schnittlänge betrug 37,7 mm.

Es wurden Stapelfasern mit folgenden Eigenschaften erhalten:

| | |
|---|---|
| Zugfestigkeit (Beispiele 1-4): | 65 - 75 cN/tex |
| Anfangsmodul (Beispiele 1-4): | 35 - 40 N/tex |
| Einzelfilamenttiter: | |
| | Beispiel 1: 1,80 dtex +/- 0,10 dtex |
| | Beispiel 2: 1,86 dtex +/- 0,18 dtex |
| | Beispiel 3: 1,70 dtex +/- 0,20 dtex |
| | Beispiel 4: 1,89 dtex +/- 0,21 dtex |

Beispiele 5 bis 8 Herstellung von Vliesen aus Fasern aus aromatischen Polyamiden und Ladungssteuermitteln

Die gemäß den Beispielen 1 bis 4 hergestellten Stapelfasern wurden zusammen mit Bikomponentenfasern zu Vliesen verarbeitet. Die Filtereigenschaften dieser Vliese wurden untersucht.

Als Bikomponentenfasern wurden handelsübliche Typen vom Kern-Mantel Typ auf der Basis von Polyethylenterephthalat (Kern) und isophthalsäuremodifiziertem Polyethylenterephthalat (Mantel) (Biko $^{R}$TREVIRA 252, 3,3 dtex, 50 mm) eingesetzt.

Es wurden jeweils 80 Gew. % Polyamidfasern und 20 Gew. % Bikomponentenfasern eingesetzt.

Vor dem Einsatz der Bikomponentenfasern wurden diese gekrempelt, gewaschen und getrocknet.

Die Herstellung der Vliese erfolgte auf einer Krempel; es wurden jeweils Vliese mit dem Flächengewicht von 200 $g/m^2$ hergestellt. Die Vliese wurden anschließend in einem Heißluftofen 3 Minuten bei 160 °C thermisch verfestigt.

Bei den erhaltenen Vliesen handelte es sich um eine Kombination von Bikomponentenfasern mit unmodifizierten Aramidfasern (Beispiel 5), um eine Kombination von Bikomponentenfasern mit modifizierten Aramidfasern, die das in Beispiel 2 definierte Ladungssteuermittel der Formel (3) aufweisen (Beispiel 6), um eine Kombination von Bikomponentenfasern mit modifizierten Aramidfasern, die das in Beispiel 3 definierte Ladungssteuermittel der Formel (6) aufweisen (Beispiel 7), und um eine Kombination von Bikomponentenfasern mit modifizierten Aramidfasern, die das in Beispiel 4 definierte Ladungssteuermittel der Formel (16) aufweisen (Beispiel 8).

Die erhaltenen Vliese wurden auf einem handelsüblichen Filterprüfstand Palas AFP 2000, der nach dem Prinzip der Streulichtpartikelgrößenzählanalyse arbeitet, auf ihre Trennwirkung hin untersucht. Dabei wurden folgende Einstellparameter verwendet:

| | |
|---|---|
| Anströmgeschwindigkeit: | 20 cm/sec |
| Partikelmassekonzentration: | 50 $mg/m^3$ |
| Bestaubungszeit: | 1 - 10 min |
| Teststaub: | "ac fine" mit folgender Zusammensetzung: |

| Partikelgröße (µm) | Teilchen-Anteil (%) |
|---|---|
| 0,3-0,5 | 55,5 |
| 0,5-1,0 | 17,3 |
| 1,0-3,0 | 26,6 |
| 3,0-5,0 | 0,5 |
| > 5,0 | nicht relevant |

Die Resultate dieser Messungen sind in den folgenden Tabellen 1-4 zusammengefaßt:

Tabelle 1

| Trenngrade des Filters aus einer Kombination von Bikomponentenfasern mit unmodifizierten Aramidfasern (Beispiel 5) bei unterschiedlichen Bestaubungszeiten | | | | | | | | | | |
|---|---|---|---|---|---|---|---|---|---|---|
| Partikelgröße (µm) | Trenngrad T(x) nach einer Bestaubungszeit t (min) | | | | | | | | | |
| | 1 | 2 | 3 | 4 | 5 | 6 | 7 | 8 | 9 | 10 |
| 0.3 | 0.91 | 0.91 | 0.90 | 0.89 | 0.88 | 0.88 | 0.87 | 0.87 | 0.86 | 0.86 |
| 0.5 | 0.94 | 0.94 | 0.93 | 0.92 | 0.92 | 0.91 | 0.91 | 0.91 | 0.90 | 0.90 |
| 1.0 | 0.95 | 0.95 | 0.95 | 0.94 | 0.94 | 0.94 | 0.93 | 0.93 | 0.93 | 0.93 |
| 3.0 | 0.98 | 0.99 | 0.98 | 0.98 | 0.98 | 0.98 | 0.98 | 0.98 | 0.98 | 0.98 |
| 5.0 | 1.00 | 1.00 | 1.00 | 1.00 | 1.00 | 0.99 | 1.00 | 1.00 | 1.00 | 1.00 |

Tabelle 2

| Trenngrade des Filters aus einer Kombination von Bikomponentenfasern mit modifizierten Aramidfasern, die ein Ladungssteuermittel der Formel (3) enthalten (Beispiel 6) bei unterschiedlichen Bestaubungszeiten | | | | | | | | | | |
|---|---|---|---|---|---|---|---|---|---|---|
| Partikelgröße (µm) | Trenngrad T(x) nach einer Bestaubungszeit t (min) | | | | | | | | | |
| | 1 | 2 | 3 | 4 | 5 | 6 | 7 | 8 | 9 | 10 |
| 0.3 | 0.98 | 0.98 | 0.98 | 0.98 | 0.98 | 0.98 | 0.98 | 0.98 | 0.97 | 0.97 |
| 0.5 | 0.99 | 0.99 | 0.99 | 0.99 | 0.98 | 0.98 | 0.98 | 0.98 | 0.98 | 0.98 |
| 1.0 | 0.99 | 0.99 | 0.99 | 0.99 | 0.99 | 0.99 | 0.99 | 0.99 | 0.99 | 0.99 |
| 3.0 | 1.00 | 1.00 | 1.00 | 1.00 | 1.00 | 1.00 | 1.00 | 1.00 | 1.00 | 1.00 |
| 5.0 | 1.00 | 1.00 | 1.00 | 1.00 | 1.00 | 1.00 | 1.00 | 1.00 | 1.00 | 1.00 |

Tabelle 3

| Trenngrade des Filters aus einer Kombination von Bikomponentenfasern mit modifizierten Aramidfasern, die ein Ladungssteuermittel der Formel (6) enthalten (Beispiel 7) bei unterschiedlichen Bestaubungszeiten | | | | | | | | | | |
|---|---|---|---|---|---|---|---|---|---|---|
| Partikelgröße (µm) | Trenngrad T(x) nach einer Bestaubungszeit t (min) | | | | | | | | | |
| | 1 | 2 | 3 | 4 | 5 | 6 | 7 | 8 | 9 | 10 |
| 0.3 | 0.97 | 0.97 | 0.97 | 0.97 | 0.97 | 0.96 | 0.96 | 0.96 | 0.96 | 0.96 |
| 0.5 | 0.98 | 0.98 | 0.98 | 0.98 | 0.98 | 0.98 | 0.97 | 0.97 | 0.97 | 0.97 |
| 1.0 | 0.99 | 0.99 | 0.99 | 0.99 | 0.99 | 0.99 | 0.99 | 0.99 | 0.99 | 0.99 |
| 3.0 | 1.00 | 1.00 | 1.00 | 1.00 | 1.00 | 1.00 | 1.00 | 1.00 | 1.00 | 1.00 |
| 5.0 | 1.00 | 1.00 | 1.00 | 1.00 | 1.00 | 1.00 | 1.00 | 1.00 | 1.00 | 1.00 |

Tabelle 4

| Trenngrade des Filters aus einer Kombination von Bikomponentenfasern mit modifizierten Aramidfasern, die ein Ladungssteuermittel der Formel (16) enthalten (Beispiel 8) bei unterschiedlichen Bestaubungszeiten | | | | | | | | | | |
|---|---|---|---|---|---|---|---|---|---|---|
| Partikelgröße (µm) | Trenngrad T(x) nach einer Bestaubungszeit t (min) | | | | | | | | | |
| | 1 | 2 | 3 | 4 | 5 | 6 | 7 | 8 | 9 | 10 |
| 0.3 | 0.96 | 0.96 | 0.95 | 0.95 | 0.95 | 0.94 | 0.94 | 0.94 | 0.94 | 0.94 |
| 0.5 | 0.97 | 0.97 | 0.97 | 0.96 | 0.96 | 0.96 | 0.96 | 0.95 | 0.96 | 0.95 |
| 1.0 | 0.98 | 0.98 | 0.98 | 0.97 | 0.97 | 0.97 | 0.97 | 0.97 | 0.97 | 0.97 |
| 3.0 | 0.99 | 1.00 | 1.00 | 0.99 | 1.00 | 1.00 | 0.99 | 0.99 | 0.99 | 0.99 |
| 5.0 | 1.00 | 1.00 | 1.00 | 1.00 | 1.00 | 1.00 | 1.00 | 1.00 | 1.00 | 1.00 |

Zur weiteren Charakterisierung der Filterleistung der Vliese der Beispiele 5 bis 8 wurden die nicht abgeschiedenen Partikel nach einer Bestaubungszeit von 5 Minuten einander gegenübergestellt. Die Resultate sind in der folgenden Tabelle 5 aufgelistet.

Tabelle 5

| Vlies nach Beispiel Nr. | 5 | 6 | 7 | 8 |
|---|---|---|---|---|
| Partikelmenge im Rohgas | 121000 | 121000 | 124000 | 117000 |
| Partikelmenge im Reingas | 11200 | 2200 | 3100 | 5000 |

**Patentansprüche**

**1.** Zusammensetzungen enthaltend ein in organischen Lösungsmitteln lösliches aromatisches Polyamid und 0,01 bis 30 Gew.-%, vorzugsweise 0,01 bis 10, insbesondere 0,1 bis 5 Gew.-%, bezogen auf das Gewicht der Zusammensetzung, organische oder metallorganische Ladungssteuermittel.

2. Zusammensetzungen nach Anspruch 1, dadurch gekennzeichnet, daß es sich bei dem in organischen Lösungsmitteln löslichen aromatischen Polyamid um ein Polymeres handelt, das die wiederkehrenden Struktureinheiten der Formeln I, gegebenenfalls II und gegebenenfalls III aufweist

$-OC-Ar^1-CO-NH-Ar^2-NH-$ (I),

$-OC-Ar^1-CO-NH-Ar^3-NH-$ (II),

$-OC-Ar^1-CO-NH-Ar^4-NH-$ (III),

worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden,
$Ar^3$ und $Ar^4$ oder $Ar^2$, $Ar^3$ und $Ar^4$, falls in einem Polymermolekül auftretend, im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches aromatisches Polyamid ergibt.

3. Zusammensetzungen nach Anspruch 2, dadurch gekennzeichnet, daß es sich bei dem in organischen Lösungsmitteln löslichen aromatischen Polyamid um ein Polymeres handelt, das die wiederkehrenden Struktureinheiten der oben definierten Formeln I, II und III aufweisen, worin
$Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden,
$Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden,
$Ar^3$ einen Rest der Formel IV darstellt

$-Ar^5-X-Ar^6-$ (IV),

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, $-SO_2-$, -O-Phenylen-O- oder Alkylen ist, und worin
$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

4. Zusammensetzungen nach Anspruch 2, dadurch gekennzeichnet, daß es sich bei dem in organischen Lösungsmitteln löslichen aromatischen Polyamid um ein Polymeres handelt, das die wiederkehrenden Struktureinheiten der oben definierten Formel I aufweist, worin
$Ar^1$ einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden, insbesondere 1,3-Phenylen bedeutet, und
$Ar^2$ einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden, insbesondere 1,3-Phenylen bedeutet.

5. Zusammensetzungen nach Anspruch 3, dadurch gekennzeichnet, daß $Ar^1$ und $Ar^2$ 1,4-Phenylen sind, $Ar^5$ und $Ar^6$ 1,4-Phenylen darstellen, X -O-, $-CH_2-$oder -O-1,4-Phenylen-O- ist und $Ar^4$ einen zweiwertigen Rest des 3,3'-Dichlorbenzidins, des 3,3'-Dimethylbenzidins, des 3,3'-Dimethoxybenzidins oder des 3,4'-Diaminodiphenylethers darstellt.

6. Zusammensetzungen gemäß Anspruch 1, dadurch gekennzeichnet, daß die Zusammensetzung ein Ladungssteuermittel enthält wie es in Tonern für elektrophotographische Prozesse enthalten ist.

**7.** Zusammensetzungen nach Anspruch 1, dadurch gekennzeichnet, daß die Zusammensetzung als Ladungssteuermittel eine oder verschiedene Verbindungen aus folgenden Klassen enthält:

Triphenylmethane; Ammonium- und Immoniumverbindungen; fluorierte Ammonium- und Immoniumverbindungen; biskationische Säureamide; polymere Ammoniumverbindungen; Diallylammoniumverbindungen; Arylsulfide-Derivate; Phenolderivate; Phosphoniumverbindungen und fluorierte Phosphoniumverbindungen; Calix(n)arene; Metallkomplexverbindungen; Benzimidazolone; oder Azine, Thiazine oder Oxazine, die im Colour Index als Pigments, Solvent Dyes, Basic Dyes oder Acid Dyes aufgeführt sind.

**8.** Zusammensetzung nach Anspruch 7, dadurch gekennzeichnet, daß es sich bei den Triphenylmethanen um Verbindungen der Formel (1) handelt

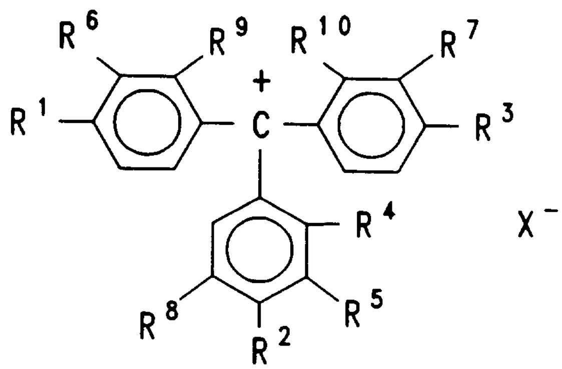

(1)

worin

$R^1$ und $R^3$ gleich oder verschieden sind und $-NH_2$, eine Mono- und Dialkylaminogruppe deren Alkylgruppen 1-4, vorzugsweise 1 oder 2, C-Atome haben, eine Mono- oder Di-omega-hydroxyalkylaminogruppe dere Alkylgruppen 2-4, vorzugweise 2, C-Atome haben, eine ggf. N-Alkylsubstituierte Phenyl- oder Phenalkylaminogruppe deren Alkyl 1-4, vorzugsweise 1 oder 2 C-Atome hat, deren Phenalkylgruppe in der aliphatischen Brücke 1 bis 4, vorzugsweise 1 oder 2 C-Atome hat und deren Penylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,

$R^2$ Wasserstoff ist oder eine der für $R^1$ und $R^3$ genannten Bedeutungen hat,

$R^4$ Wasserstoff, Halogen, vorzugsweise Chlor, oder eine Sulfonsäuregruppe bedeutet oder mit $R^5$ zusammen einen ankondensierten Phenylring bildet,

$R^5$ mit $R^4$ zusammen einen ankondensierten Phenylring bildet,

$R^6$, $R^7$, $R^9$ und $R^{10}$ jeweils Wasserstoff oder einen Alkylrest mit 1 oder 2 C-Atomen, vorzugsweise Methyl bedeuten und

$R^8$ Wasserstoff oder Halogen, vorzugsweise Chlor, ist und

$X^-$ für ein Äquivalent eines Anions steht, insbesondere für ein Chlorid-, Sulfat-, Tetrachloroaluminat-, Molybdat-, Phosphormolybdat-und Borat-Anion.

**9.** Zusammensetzungen nach Anspruch 7, dadurch gekennzeichnet, daß es sich bei den fluorierten Ammonium- und Immoniumverbindungen um Verbindungen der Formel (3) handelt

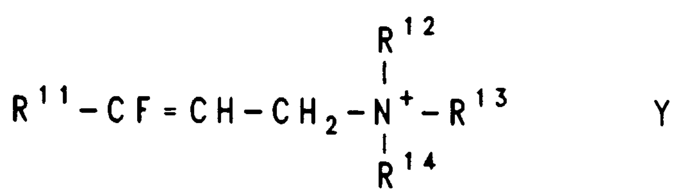

(3)

worin

$R^{11}$ perfluoriertes Alkyl mit 5-11 C-Atomen,

$R^{12}$, $R^{13}$ und $R^{14}$ gleich oder verschieden sind und Alkyl mit 1-5, vorzugsweise 1-2 C-Atomen bedeuten,

$Y^-$ ein Äquivalent eines Anions, vorzugsweise eines Tetrafluoborat- oder Tetra-Phenylborat-Anions ist.

**10.** Zusammensetzungen nach Anspruch 7, dadurch gekennzeichnet, daß es sich bei den biskationischen Säureamiden um Verbindungen der Formel (4) handelt

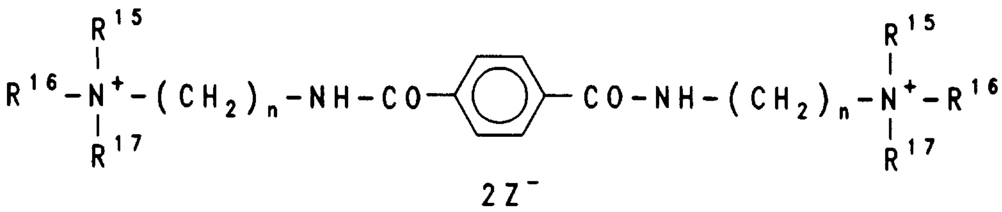

(4)

worin
$R^{15}$, $R^{16}$ und $R^{17}$ gleiche oder verschiedene Alkylreste mit 1-5 C-Atomen, vorzugsweise Methyl sind,
n für eine ganze Zahl von 2 bis 5 steht,
und $Z^-$ für ein Äquivalent eines Anions steht, vorzugsweise für ein Tetraphenylborat-Anion.

**11.** Zusammensetzungen nach Anspruch 7, dadurch gekennzeichnet, daß es sich bei den Diallylammoniumverbindungen um Verbindungen der Formel (5) handelt

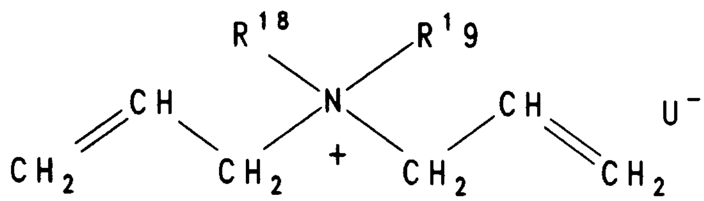

(5)

worin
$R^{18}$ und $R^{19}$ gleiche oder verschiedene Alkylgruppen mit 1-5, vorzugsweise 1 oder 2, C-Atomen, bedeuten, insbesondere aber für Methylgruppen stehen und $U^-$ für ein Äquivalent eines Anions steht, vorzugsweise für ein Tetraphenylborat-Anion steht.

**12.** Zusammensetzungen nach Anspruch 7, dadurch gekennzeichnet, daß es sich bei den polymeren Ammoniumverbindungen um Verbindungen der Formel (6) handelt

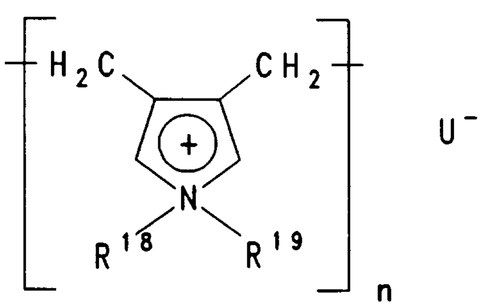

(6)

worin n einen Wert hat, der Molekulargewichten von 5000 bis 500000 entspricht und $R^{18}$, $R^{19}$ und $U^-$ die in Anspruch 11 gegebene Definition aufweisen.

**13.** Zusammensetzungen nach Anspruch 7, dadurch gekennzeichnet, daß es sich bei den Arylsulfide-Derivaten um Verbindungen der Formel (7) handelt

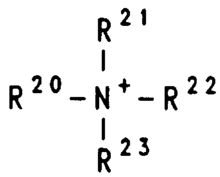 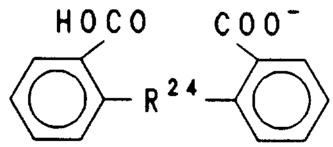 (7)

worin
$R^{20}$, $R^{21}$, $R^{22}$ und $R^4$ gleiche oder verschiedene Alkylgruppen mit 1-5, vorzugsweise 2 oder 3, C-Atomen, bedeuten und
$R^{24}$ einer der zweiwertigen Reste -S-, -S-S-, -SO- oder $-SO_2-$ ist.

**14.** Zusammensetzungen nach Anspruch 7, dadurch gekennzeichnet, daß es sich bei den Phenolderivaten um Verbindungen der Formel (8) handelt

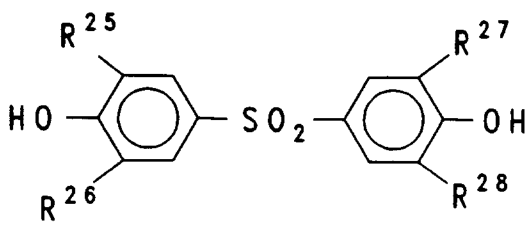 (8)

worin
$R^{25}$ und $R^{27}$ Alkyl- oder Alkenylgruppen mit 1 bis 5, vorzugsweise 1 bis 3 C-Atomen und $R^{26}$ und $R^{28}$ Wasserstoff oder Alkyl mit 1 bis 3, vorzugsweise Methyl bedeuten.

**15.** Zusammensetzungen nach Anspruch 7, dadurch gekennzeichnet, daß es sich bei den Phosphoniumverbindungen und fluorierten Phosphoniumverbindungen um Verbindungen der Formel (9) oder (10) handelt,

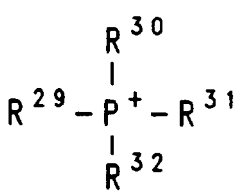 $V^-$ (9)

worin
$R^{29}$, $R^{30}$, $R^{31}$ und $R^{32}$ gleiche oder verschiedene Alkylgruppen mit 1-8, vorzugsweise 3 bis 6, C-Atomen, bedeuten und $V^-$ für ein Äquivalent eines Anions steht, vorzugsweise für ein Halogenid-Anion und 10;

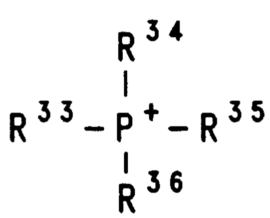 $W^-$ (10)

worin
$R^{33}$ ein hochfluorierter Alkylrest mit 5-15, vorzugsweise 6-10, C-Atomen,
$R^{34}$, $R^{35}$ und $R^{36}$ Alkyl mit 3-10 C-Atomen oder Phenyl sind und

$W^-$ für das Äquivalent eines Anions steht.

**16.** Zusammensetzungen nach Anspruch 7, dadurch gekennzeichnet, daß es sich bei den Calix(n)arenen um Verbindungen der Formel (11) handelt

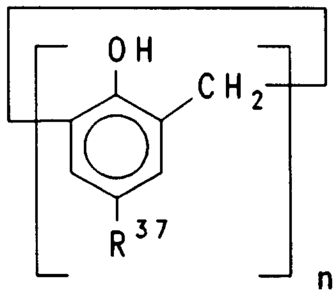

(11)

worin
$R^{37}$ für Wasserstoff, Halogen, vorzugsweise Chlor, geradkettiges oder verzweigtes Alkyl mit 1-12 C-Atomen, Aralkyl, z.B. Benzyl oder Phenethyl, Cyclohexyl, $-NO_2$, $-NH_2$, $-NHR^{38}$ oder $-NR^{38}R^{39}$ steht, wobei $R^{38}$ und $R^{39}$ Alkyl mit 1-8 C-Atomen, ggf. substituiertes Phenyl oder $-Si(CH_3)_3$ bedeuten.

**17.** Zusammensetzungen nach Anspruch 7, dadurch gekennzeichnet, daß es sich bei den Metallkomplexverbindungen um Verbindungen der Formel (12), (13) und (14) handelt

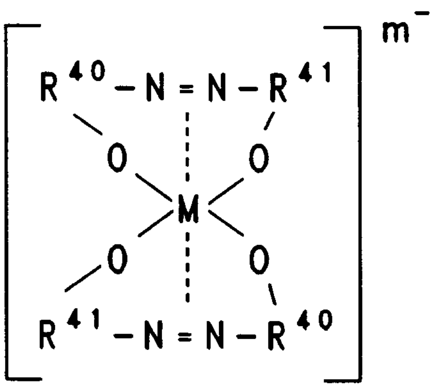

$mK^+$ (12)

worin
M ein 2- oder 3-wertiges Metallatom, vorzugsweise Chrom, Kobalt, Eisen, Zink oder Aluminium bedeutet,
$R^{40}$ und $R^{41}$ für zweibindige aromatische Ringe, vorzugsweise der Formeln

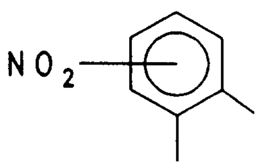 , 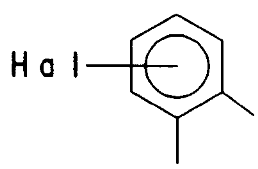 oder 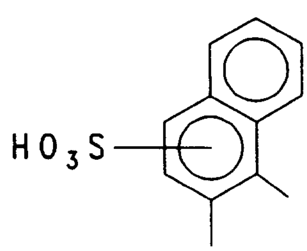

stehen, Hal Halogen bedeutet, m eine der Zahlen 1 oder 2 ist und $K^+$ ein Äquivalent eines Kations ist,

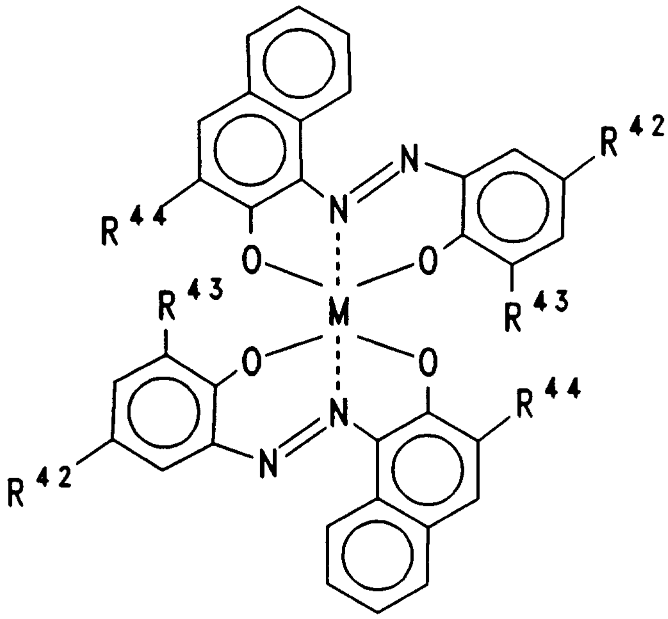

Q (13)

worin
M ein 2- oder 3-wertiges Metallatom, vorzugsweise Chrom, Kobalt, Eisen,
$R^{42}$ Wasserstoff, Halogen, vorzugsweise Cl, Nitro oder Amidosulfonyl
$R^{43}$ Wasserstoff oder Nitro,
$R^{44}$ Wasserstoff, die Sulfonsäuregruppe, -CO-NH-$R^{45}$ ist, wobei $R^{45}$ = Phenyl, Alkyl mit 1-5 C-Atomen, das ggf. durch eine Mono-, Di- oder Trialkylaminogruppe substituiert sein kann und
Q ein Gegenion ist, das die Neutralität des Komplexes herstellt, vorzugsweise ein Proton, ein Alkali- oder ein Ammonium-Ion,

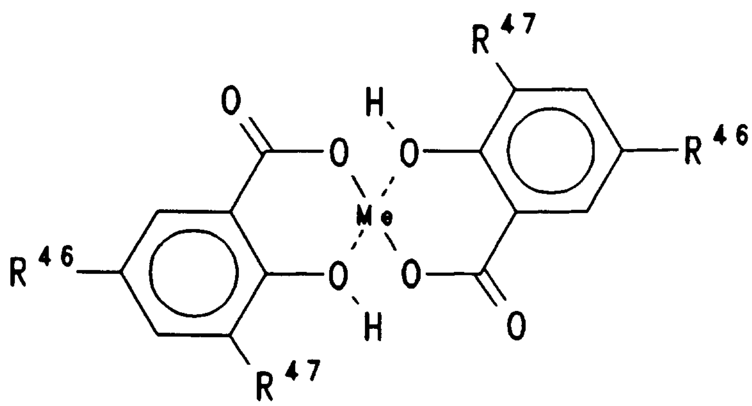

(14)

worin
Me ein zweiwertiges Metall-Zentralatom, vorzugsweise ein Zinkatom,
$R^{47}$ und $R^{46}$ gleiche oder verschiedene, geradkettige oder verzweigte Alkylgruppen mit 1-8, vorzugsweise 3-6 C-Atomen, beispielsweise tert. Butyl, bedeuten.

**18.** Zusammensetzungen nach Anspruch 7, dadurch gekennzeichnet, daß es sich bei den Benzimidazolonen um Verbindungen der Formel (15) handelt

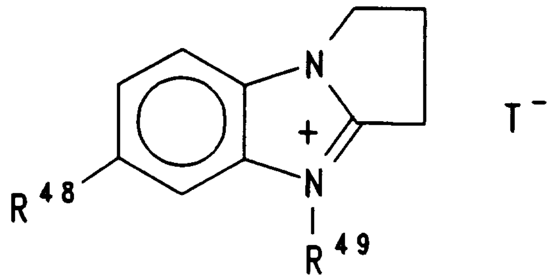

(15)

worin
$R^{48}$ Alkyl mit 1-5 C-Atomen und $R^{49}$ Alkyl mit 1-12 C-Atomen und $T^-$ ein Äquivalent eines Anions, insbesondere ein Chlorid- oder tetrafluoborat-Anion ist.

**19.** Zusammensetzungen nach Anspruch 7, dadurch gekennzeichnet, daß es sich bei den Azinen um Azine der folgenden Colour Index-Nummern handelt: C.I. Solvent Black 5, 5:1, 5:2, 7, 31 und 50; C.I. Pigment Black 1, C.I. Basic Red 2, C.I. Basic Black 1 und 2 und C.I. Oxidation Base 1; oder Thiazine der folgenden Colour Index Nummern: C.I. Basic Blue 9, 24 oder 25 und C.I. Solvent Blue 8; oder Oxazine der Colour Index Nummern C.I. Pigment Violet 23, C.I. Basic Blue 3, 10 oder 12; sowie die im Colour Index unter Basic Dye oder Acid Dye aufgeführten Azine, Thiazine und Oxazine.

**20.** Zusammensetzungen nach Anspruch 8, dadurch gekennzeichnet, daß $R^1$ und $R^3$ Phenylamino und $R^2$ 3-Methyl-phenylamino und $X^-$ ein Sulfatäquivalent ist.

**21.** Zusammensetzungen nach Anspruch 11, dadurch gekennzeichnet, daß $R^{18}$ und $R^{19}$ Methyl und $U^-$ ein Tetraphenylborat-Anion ist.

**22.** Zusammensetzungen nach Anspruch 9, dadurch gekennzeichnet, daß $Y^-$ Tetraphenylborat oder Tetrafluoroborat ist.

**23.** Zusammensetzungen nach Anspruch 13, dadurch gekennzeichnet, daß $R^{20}$, $R^{21}$, $R^{22}$ und $R^{23}$ Propyl und $R^{24}$ eine Disulfid-Brücke ist.

**24.** Zusammensetzungen nach Anspruch 17, dadurch gekennzeichnet, daß darin als Ladungssteuermittel eine Verbindung der Formel (13) enthalten ist, worin $R^{42}$ Chlor, $R^{43}$ Wasserstoff und Q ein Proton bedeutet.

**25.** Geformte Gebilde aus Zusammensetzungen nach Anspruch 1.

**26.** Geformte Gebilde nach Anspruch 25, dadurch gekennzeichnet, daß es sich bei den geformten Gebilden um Filme oder insbesondere um Fasern handelt.

**27.** Geformte Gebilde nach Anspruch 26, dadurch gekennzeichnet, daß die Gebilde Fasern sind, die einen Titer von kleiner gleich 2 dtex haben.

**28.** Geformte Gebilde nach Anspruch 26, dadurch gekennzeichnet, daß die Fasern Reißfestigkeiten von 25 bis 280 cN/tex, Reißdehnungen von 2 bis 10 % und Anfangsmoduli von 20 bis 150 N/tex aufweisen.

**29.** Geformte Gebilde nach Anspruch 26, dadurch gekennzeichnet, daß die Fasern einen Präparationsauftrag von 0 bis 0,3 Gew.-% aufweisen.

**30.** Geformte Gebilde nach Anspruch 26, dadurch gekennzeichnet, daß die Fasern eine hydrophobe Präparation aufweisen.

**31.** Geformte Gebilde nach Anspruch 26, dadurch gekennzeichnet, daß die Fasern in Form von Multifilamentgarnen, Kabeln und Vliesen vorliegen.

**32.** Verfahren zur Herstellung der geformten Gebilde des Anspruchs 25 umfassend die Schritte:
a) Herstellen einer Ausformlösung enthaltend organisches Lösungsmittel, in organischen Lösungsmitteln lösliches aromatisches Polyamid und 0,01 bis 30 Gew.-%, bezogen auf das Gewicht der Festanteile, organische oder metallorganische Ladungssteuermittel,
b) Extrudieren der Ausformlösung durch eine Düse, welche Öffnungen in vorgegebener Anzahl und Form enthält, so daß das gewünschte geformte Gebilde entsteht, und
c) Entfernen des organischen Lösungsmittels in an sich bekannter Weise, so daß ein lösungsmittelärmeres oder -freies geformtes Gebilde entsteht, das eine für die weitere Verarbeitung ausreichende mechanische Stabilität und Klebfreiheit aufweist.

**33.** Verfahren zur Herstellung geformter Gebilde nach Anspruch 32, dadurch gekennzeichnet, daß in Schritt c) das gemäß Schritt b) erzeugte primäre geformte Gebilde in ein Bad enthaltend eine Koagulationsflüssigkeit eingebracht wird, so daß das organische Lösungsmittel aus besagtem primärem geformten Gebilde entfernt wird und das gewünschte geformte Gebilde duch Koagulation des Primärgebildes entsteht, das eine für die weitere Verarbeitung ausreichende mechanische Stabilität aufweist.

**34.** Vliesstoff enthaltend Fasern nach Anspruch 26.

**35.** Verwendung der Fasern nach Anspruch 26 zur Herstellung von Vliesstoffen.

**36.** Verwendung von Vliesstoffen nach Anspruch 34 zur Herstellung von Filtern, insbesondere Staubfiltern.